# EUROPÄISCHE PATENTSCHRIFT

(11) **EP 1 866 487 B1**
(45) Veröffentlichungstag und Bekanntmachung des Hinweises auf die Patenterteilung: **19.05.2010**
(21) Anmeldenummer: 06724137.2
(22) Anmeldetag: 07.04.2006
(51) Int. Cl.: E03F 7/06, F16K 15/03, E03F 7/04

(54) **ABSPERRVORRICHTUNG MIT EINEM, EINEN MAGNETVERSCHLUSS AUFWEISENDEN SPERRELEMENT FÜR EINEN ABWASSERKONTROLLSCHACHT**
SHUT-OFF DEVICE FOR A WASTE-WATER INSPECTION CHAMBER, COMPRISING A SHUT-OFF ELEMENT WITH A MAGNETIC LOCK
DISPOSITIF DE RETENUE POUR UN REGARD D'EGOUT

(30) Priorität: 08.04.2005 DE 102005016526; 25.06.2005 DE 102005029520
(43) Veröffentlichungstag der Anmeldung: 19.12.2007
(73) Patentinhaber: Giehl, Klaus Ulrich, 57629 Heimborn (DE)
(72) Erfinder: Giehl, Klaus Ulrich, 57629 Heimborn (DE)
(74) Vertreter: Laufhütte, Dieter
(86) Internationale Anmeldenummer: PCT/EP2006/003198
(87) Internationale Veröffentlichungsnummer: WO 2006/105983

(56) Entgegenhaltungen:
- CA-A1- 2 279 723
- FR-A- 2 079 980
- JP-A- 2004 285 652
- US-A- 3 294 115
- PATENT ABSTRACTS OF JAPAN Bd. 1999, Nr. 12, 29. Oktober 1999 (1999-10-29) & JP 11 193872 A (KUBOTA CORP), 21. Juli 1999 (1999-07-21)

## Beschreibung

Die Erfindung betrifft eine Absperrvorrichtung für einen Abwasserkontrollschacht nach der im Oberbegriff des Anspruchs 1 genannten Art, mit der sowohl das Eindringen von Ratten und/oder als auch das Eindringen von durch Rückstau bedingtem Abwasser, insbesondere in die Grundstücksentwässerung bzw. in sonstige Abwasserkanalanlagen verhindert werden soll.

Ratten haben sich in den Kanalisationsanlagen von Siedlungen zu einer Plage entwickelt. Nicht selten dringen sie sogar über die Grundstücksentwässerung bis in die Wohngebäude vor. Als Seuchenträger und Verbreiter von Infektionskrankheiten stellen die Ratten zunehmend ein Gefahrenpotential für den Menschen dar.

Hinzu kommt, dass Kanalnetze vielerorts bei Starkregenereignissen hydraulisch überlastet sind, wobei sich dann die in der Kanalisation aufstauenden Wassermengen über die Grundstücksentwässerungsanlagen bis in die Gebäude als sog. Rückstau fortpflanzen und dort zu Überflutungen führen.

Die US-A-3 294 115 offenbart ein Klappenrückschlagventil mit einer Rückschlagklappe, die magnetisch fixiert wird. In der Druckschrift JP 2004 28 5652 ist eine Absperrvorrichtung für einen Straßengulli beschrieben.

Um sich gegen ein Vordringen der Ratten und gegen Rückstau aus den öffentlichen Kanalisationsanlagen zu schützen, ist nach der Druckschrift CA 2 279 723 ein bewegbarer Absperrgitter bekannt, weiterhin sind nach den Druckschriften JP 11 193 872 A und FR 2 079 980 selbsttätige Absperrvorrichtungen, insbesondere für Reinwasseranlagen, bekannt geworden, die auch dazu geeignet sind, in Abwasserkontrollschächten eingebaut zu werden, die eine Zulauföffnung und eine Ablauföffnung aufweisen.

Die bekannte Absperrvorrichtung aus der JP 11 193872 A besteht aus einem vor einer Zulauföffnung angeordneten klappenartigen Sperrelement, das über die Strömungskraft des Abwasserflusses nach oben aufschwingbar und von einem Magnetverschluss festhalt- und loslassbar ist. Dabei hält der Magnetverschluss das. Sperrelement gegen die Zulauföffnung dichtend fest und lässt es bei einem auf es in Fließrichtung wirkenden definierten Wasserdruck zur schlagartigen Freigabe der Zulauföffnung wieder los.

Das zurückgehaltene Abwasser fließt jetzt schwallartig ab, wobei infolge der daraus resultierenden relativ starken Strömungskraft ein hydraulischer Reinigungs- bzw. Spüleffekt bewirkt wird (oberhalb der Absperrvorrichtung durch den Ablaufsunk und unterhalb der Absperrvorrichtung durch den Abflussschwall), durch den Feststoffablagerungen im Bereich der Absperrvorrichtung sowie im Zu- und Ablaufkanal weggeschwemmt werden.

Im Rückstaufall wird die Zulauföffnung über den auf das Sperrelement einwirkenden Druck des zurückströmenden Wassers dichtend verschlossen. Befindet sich das Sperrelement in der Sperrstellung, dann ist so den Ratten der Durchgang versperrt.

Mit der Sperrstellung ist die zur Zulauföffnung gerichtete unterste Position des Sperrelementes gemeint.

Darüber hinaus können die Ratten das vom Magnetverschluss gehaltene Sperrelement nicht mehr anheben.

Hierbei ergibt sich das Problem, dass beispielsweise der bei einer Toilettenspülung ausgelöste und noch relativ große Abwasserschwall sich auf dem Fließweg in der Entwässerungsleitung vergleichmäßigt und dabei bis zum Ende des Abflussereignisses stetig an Strömungskraft verliert und so die im Abwasser mitgeführten gröberen Feststoffe bei geringer Wasserführung aufgrund der damit verbundenen relativ geringen Strömungskraft an dem Sperrelement bzw. auf der Kanalsohle Ablagerungen bilden oder beim Absperrvorgang von Sperrelementen an der Dichtung eingeklemmt werden. Dadurch ist eine vollständige Rückführung des Sperrelementes in die Sperrstellung nicht mehr möglich. Das Sperrelement verbleibt dann unkontrolliert in einer Offenstellung stehen, die die Ratten dazu veranlasst, das Sperrelement anzuheben und dann unter diesem hindurch zu kriechen.

Ebenso ist dann im Rückstaufall die Dichtfunktion gegen die Zulauföffnung gestört und die Rückstausicherung somit wirkungslos.

Ausgehend von dieser Problematik liegt der Erfindung die Aufgabe zugrunde, eine Absperrvorrichtung der eingangs genannten Art für den Einsatz im Abwasser derart weiterzubilden, dass die v. g. Nachteile vermieden werden und somit die Betriebssicherheit erhöht wird.

Die Lösung dieser Aufgabe erfolgt nach den kennzeichnenden Merkmalen des Patentanspruchs 1; besondere Weiterbildungen sind in den kennzeichnenden Merkmalen der Unteransprüche aufgeführt.

Erfindungsgemäß ist im Inneren des Zulaufs in definiertem Abstand vor dem Sperrelement ein vom Abwasserfluss bewegbares Rechenteil angeordnet, das vorzugsweise im Scheitelbereich des Zulaufs gelenkig befestigt ist. In der Phase nachlassender Strömungskraft bzw. bei geringer Wasserführung bleiben die im Abwasser mitgeführten Feststoffe an dem beispielsweise in Form von Gitterstäben, eines zungenförmigen Blechstreifens o. ä. ausbildbare Rechenteil hängen, das so wie eine Art Vorsperre wirkt und die Feststoffe vor dem Sperrelement zurückhält. Dadurch wird verhindert, dass Treibgut in den Bereich an der Dichtung zwischen Zulauföffnung und Sperrelement bzw. unter das sich schließende Sperrelement gelangen und so die Absperrfunktion beeinträchtigen kann.

Bei hohen Durchflussmengen wird das Rechenteil durch den Wasserdruck nach oben verschwenkt, so dass in ihm gefangenes Treibgut vom Rechtenteil abfällt und weggeschwemmt wird.

Wenn in der Sperrstellung bei eingestautem Zulauf die auf das Sperrelement einwirkende Wasserdruckkraft den Magnetverschluss löst, dann schwingt der zunächst relativ starke Ausflussschwall neben dem Sperrelement auch das Rechenteil nach oben auf, so dass die zuletzt vom Rechenteil zurückgehaltenen Feststoffe durch die Zulauföffnung mit dem in dieser Phase relativ weit geöffneten Sperrelement verstopfungsfrei fortgespült werden.

Vorteilhafterweise kann das Rechenteil nach einer Weiterbildung ein Schwimmelement umfassen, so dass es von einem steigenden Wasserspiegel nach oben bewegt wird und dadurch die in der unteren Vorsperrenposition zuvor zurückgehaltenen Feststoffe für einen effektiven Feststoffaustrag über den Ausflussschwall wieder freigibt. Das Rechenteil sinkt dann erst mit fallendem Wasserspiegel, also in einer für das Einklemmen von Feststoffen am Sperrelement kritischen Phase, wieder in die Vorsperrenposition. Hierdurch entsteht der Vorteil, dass die Energie des Ausflussschwalls unmittelbar nach Freigabe der Zulauföffnung nicht durch ein beispielsweise ohne Schwimmelement ausgebildetes permanent gegen die Fließströmung wirkendes Rechenteil gehemmt wird und so die eigentliche Vorsperrenfunktion erst bei nachlassender Strömungskraft bzw. bei niedrigem Wasserspiegel zum tragen kommt.

Die derart in der Absperrphase vom Rechenteil zunächst zurückgehaltenen Feststoffe werden dann im Zyklus des nachfolgenden Schwallereignisses mit fortgespült.

Eine beispielhafte Ausführungsform wird nachfolgend unter Hinweis auf die Zeichnungen näher erläutert. Es zeigen:
- Fig. 1:: Absperrvorrichtung in der Sperrstellung als Schnitt in Fließrichtung,
- Fig. 2:: Absperrvorrichtung nach Fig. 1 in einer Schnittansicht in Fließrichtung auf Höhe des Rechenteils
- Fig. 3:: Absperrvorrichtung nach Fig. 1 in der Sperrstellung als Schnitt in Fließrichtung
- Fig. 4:: Absperrvorrichtung nach Fig. 1 während des Spülvorgangs
- Fig. 5:: Absperrvorrichtung nach Fig. 1 während des Sperrvorgangs und
- Fig. 6:: Absperrvorrichtung nach Fig. 1 mit schwimmbarem Rechenteil.

Die Figuren zeigen einen Abwasserkontrollschacht 1, mit einem für den Abwasserfluss in seinem Inneren oben offenen Gerinne 2, mit einem Zulauf 3 und einem Ablauf 4, wobei der Zulauf 3 in den Innenraum des Kontrollschachtes 1 hineinragt.

Vor der Zulauföffnung 23 ist ein klappenförmiges Sperrelement 5 angeordnet, das um eine horizontale Drehachse 7 in Fließrichtung nach oben aufschwingbar ist.

Am äußeren Rand des klappenförmigen Sperrelementes ist beispielhaft ein ringförmiges Dichtungselement 8 befestigt, das gegen die Zulauföffnung 23 in der Sperrstellung durch die magnetische Anziehungskraft des Magnetverschlusses 6 dichtend angepresst wird.

Das Sperrelement 5 ist über eine Strebe 33 an einem Schwenkarm 35 angeordnet, der um eine Drehachse 7 drehbar an einer Konsole 11 gelagert ist. Der Magnetverschluss besteht aus einem Magnetteil 6 an der Konsole und einem Gegenelement 32 an der Oberseite des Schwenkarms 35.

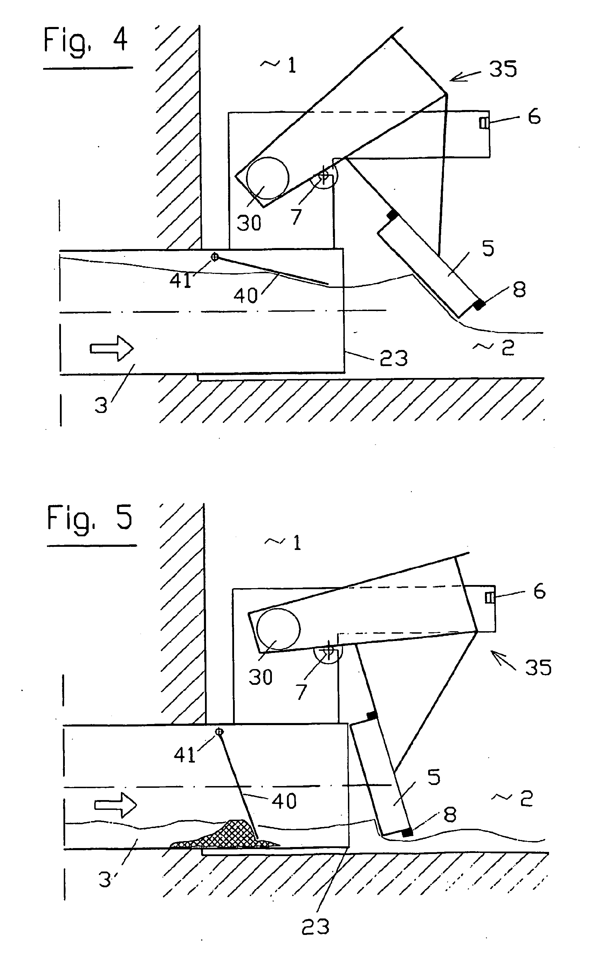

Um den Sperrvorgang der Absperrvorrichtung zu verbessern, ist im Schwenkarm 35 ein Gehäuse integriert, in dem sich eine auf einer Ebene 31 laufende Kugel 30 befindet. In der in Fig. 4 Fig. 5 gezeigten Position des Schwenkhebels 35 verläuft diese Ebene 31 schräg nach links unten, so dass sich die Kugel ganz links auf der Ebene 31 befindet und mit einer linken Seitenwand des Gehäuses in Kontakt ist. Der Schwenkarm 35 mit dem Sperrelement 5 ist aber so ausbalanciert, dass die Seite des Schwenkarms 35 mit dem Sperrelement 5 das Übergewicht hat und den Schwenkarm 35 im Uhrzeigersinn bewegt, wenn keine oder nur eine geringe Flüssigkeitsströmung aus dem Zulauf 3 fließt.

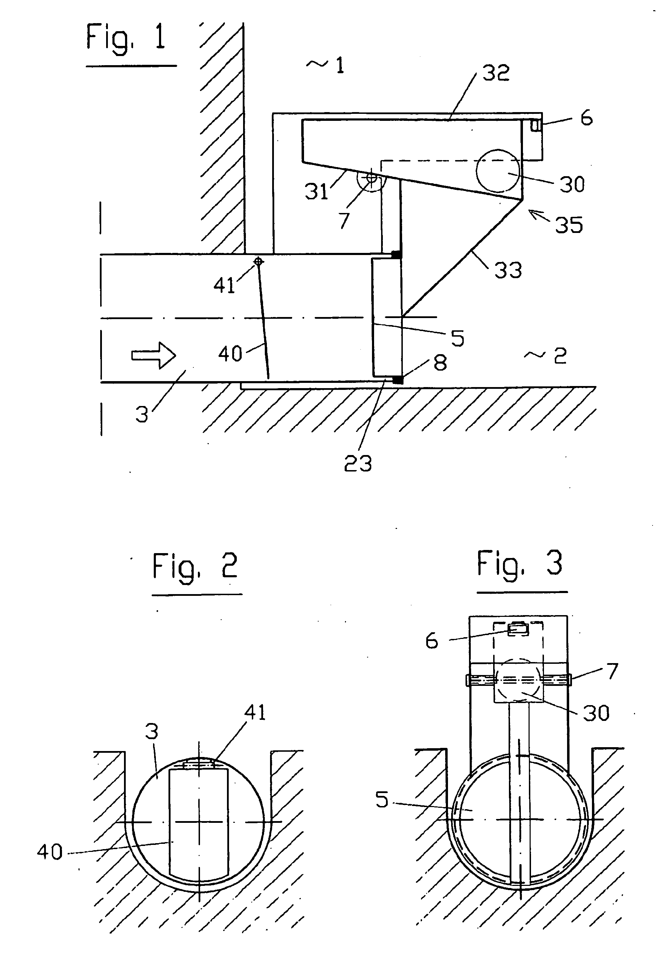

Fig. 1 zeigt an dem Ausführungsbeispiel der Absperrvorrichtung das erfindungsgemäße Rechenteil 40, das verhindert, daß besonders sperrige und klumpige Feststoffe zwischen dem Sperrelement 5 mit der Dichtung 8 und der Zulauföffnung 23 des Zulaufs 3 eingeklemmt werden können. Das Rechenteil 40 ist dabei im Zulauf 3 in einem definierten Abstand vor dem Sperrelement 5 im Bereich des Rohrschenkels um eine Achse 41 schwenkbar angeordnet und weist im wesentlichen die gleiche Höhe auf wie der Zulauf 3.

Dabei ragt die dem Zulauf 3 zugewandte Seite des Sperrelements 5 mit ihrer Kontur 25 in die Zulauföffnung 23 hinein.

Fig. 2 zeigt einen Schnitt durch den Zulauf 3 auf der Höhe des Rechenteils 40. Dieses ist um die Achse 41 im Scheitelbereich des Zulaufs 3 schwenkbar angeordnet, wobei die Unterkante des Rechenteils 40 in der hier gezeigten hängenden Position mit der Sohle des Zulaufs beinahe in Kontakt steht.

Fig. 3 zeigt eine Schnittansicht des Ausführungsbeispiels auf Höhe des Sperrelements 5 bei abgesperrtem Zulauf.

Fig. 4 zeigt das Ausführungsbeispiel der vorliegenden Erfindung während des Spülvorgangs. Der Druck durch das aufgestaute Wasser im Zulauf 3 hat den Magnetverschluß 6 geöffnet, so daß das Sperrelement 5 von der Wasserströmung aus seiner Sperrposition herausbewegt wurde und der gesamte Schwenkarm 35 mit dem Sperrelement 5 um die Drehachse 7 gegen den Uhrzeigersinn gedreht wurde. Die Zulauföffnung 23 ist damit freigegeben, das Wasser strömt mit hoher Geschwindigkeit in das Gerinne 2. Das Rechenteil 40 wird von der Strömung des Wassers um die Achse 41 ebenfalls gegen den Uhrzeigersinn nach oben in Richtung der Zulauföffnung 23 gedreht. Das Wasser kann aus dem Zulauf ungehindert ausströmen, wobei mitgeführte sperrige oder klumpige Feststoffe durch die starke Strömung des Wassers mitgerissen werden.

Fig. 5 zeigt nunmehr das Ausführungsbeispiel während des Schließvorgangs des Sperrelements 5. Die Wasserströmung aus dem Zulauf 3 hat sich stark verringert, so daß das Sperrelement 5 von der Strömung nicht mehr so stark nach oben gedrückt wird. Hierdurch hat sich der Schwenkarm 35 mit dem Sperrelement 5 wieder im Uhrzeigersinn um die Drehachse 7 gedreht, so daß der Abstand zwischen der Dichtung 8 des Sperrelements 5 und der Zulauföffnung 23 geringer wird.

Nun ist auch die Strömung nicht mehr so stark, daß sperrige oder klumpige Feststoffe mitgerissen würden, so daß die Gefahr bestünde, daß diese zwischen Sperrelement 5 und Zulauföffnung 23 eingeklemmt würden, wodurch das Sperrelement 5 den Zulauf 3 nicht mehr komplett verschließen würde. Dies wird jedoch durch das Rechenteil 40 verhindert, welches ebenfalls von der Strömung nicht mehr nach oben gedreht wird, sondern im wesentlichen nach unten hängt. Hierdurch wirkt es wie eine Art Vorsperre, welche sperrige und klumpige Feststoffe noch vor der Zulauföffnung 23 zurückhält, so daß das Sperrelement 5 den Zulauf 3 sicher verschließen kann. Die Kugel 30, welche bei weiterer Drehung des Dreharms 35 nach rechts rollt, sorgt für eine zusätzliche Beschleunigung am Ende des Schließvorgangs und damit für eine sichere Sperrung des Zulaufs 3 durch das Sperrelement 5.

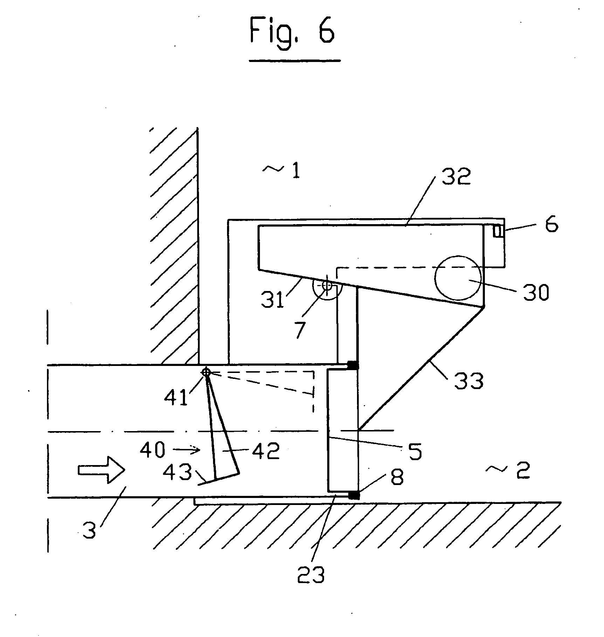

Fig. 6. zeigt ein weiteres Ausführungsbeispiel der vorliegenden Erfindung, welches sich vom vorherigen Ausführungsbeispiel lediglich in der Ausführung des Rechenteils 40 unterscheidet. Das Rechenteil 40 umfasst ein Schwimmelement 42, welches im Rechenteil 40 integriert ist und insbesondere im unteren Bereich des Rechenteils 40 für Auftrieb sorgt, wenn sich im Einlauf 3 Wasser anstaut und so der Wasserspiegel steigt. Hierdurch wird, wie gestrichelt gezeigt, das Rechenteil im angestauten Wasser nach oben bewegt, da das Rechenteil durch den vom Schwimmelement 42 insbesondere im unteren, mit dem Wasser in Kontakt stehenden Teil des Rechenteils erzeugten Auftrieb nach oben schwimmt.

Hierdurch werden die vom Rechenteil festgehaltenen Feststoffe freigegeben und können im nächsten Spülzyklus ungehindert weggespült werden. Sinkt jedoch der Wasserspiegel bei nachlassen des Wasserflusses wieder, bewegt sich das Rechenteil (40) wieder in seine im wesentlichen senkrechte Position und wirkt als Vorsperre.

Das unten am Rechenteil (40) auf der vom Sperrelement (5) wegzeigenden Seite angebrachte Querteil (43) sorgt dabei für ein noch besseres Zurückhalten der Feststoffe, da es in der Vorsperrposition des Rechenteils im wesentlichen parallel zur Kanalsohle des Zulaufs (3) verläuft und so den Feststoffen einen größeren Widerstand entgegenbringt. Bei steigendem Wasserspiegel nach dem Versperren des Zulaufs (3) kommt das Querteil (43) durch die Bewegung des Rechenteils (40) in eine im wesentlichen vertikale Position, so dass sich eventuell am Querteil (42) anhaftende Feststoffe wieder von diesem lösen.

## Patentansprüche

1. Absperrvorrichtung für einen Abwasserkontrollschacht (1), der für den Abwasserfluss in seinem Inneren ein oben offenes Gerinne (2) und einem Zulauf (3) mit einer Zulauföffnung (23) und einer Ablauföffnung aufweist, bestehend aus einem vor der Zulauföffnung (23) angeordneten Sperrelement (5), das über die Strömungskraft des Abwasserflusses nach oben aufschwingbar ist, und einem Magnetverschluss (6), der das Sperrelement (5) in der Sperrstellung gegen die Zulauföffnung (23) dichtend festhält und das Sperrelement (5) bei einem auf es in Fließrichtung wirkenden definierten Wasserdruck, der durch die Haltekraft des Magnetverschlusses bestimmbar ist, zur Freigabe der Zulauföffnung (23) losläßt,
**dadurch gekennzeichnet,**
**dass** im Inneren des Zulaufs (3) in definiertem Abstand vor dem Sperrelement (5) ein vom Abwasserfluss bewegbares Rechenteil (40) nach oben verschwenkbar angeordnet ist, derart daß vom Rechenteil (40) zurückgehaltene Feststoffe fortgespült werden.

2. Absperrvorrichtung nach Anspruch 1, **dadurch gekennzeichnet, dass** das Rechenteil (40) im Zulauf (3) in dessen Scheitelbereich gelenkig befestigt ist.

3. Absperrvorrichtung nach Anspruch 1, **dadurch gekennzeichnet, dass** das Rechenteil (40) ein Schwimmelement (42) umfasst.

## Claims

1. A shut-off device for a waste-water inspection chamber (1) which has an upwardly open gutter (2) and an inlet (3) having an inlet opening (23) and an outlet opening for the waste-water flow in its interior, comprising a shut-off member (5) which is arranged in front of the inlet opening (23) and which can be swung upwardly through a flow force of the waste-water flow and having a magnetic catch (6) which sealingly holds the shut-off member (5) in the shut-off position against the inlet opening (5) and releases the shut-off member (5) at a defined water pressure which acts on it in the flow direction and can be determined by the holding force of the magnetic catch for the release of the inlet opening (23),
**characterised in that**
a rake part (40) movable by the waste-water flow is arranged upwardly pivotably in the interior of the inlet (3) at a defined spacing from the shut-off member (5) such that solids held back by the rake part (40) are flushed away.

2. A shut-off device in accordance with claim 1, **characterised in that** the rake part (40) is pivotally connected in its apex region in the inlet (3).

3. A shut-off device in accordance with claim 1, **characterised in that** the rake part (40) includes a float member (42).

## Revendications

1. Dispositif de retenue pour un regard d'égout (1), qui présente à son intérieur pour le flux d'eaux usées une rigole ouverte sur le haut (2) et une alimentation (3) avec un orifice d'alimentation (23) et un orifice de sortie, se composant d'un élément de retenue (5) disposé en amont de l'orifice d'alimentation (23), qui est pivotable vers le haut par l'intermédiaire de la force d'écoulement du flux d'eaux usées, et un verrouillage magnétique (6), qui fixe hermétiquement l'élément de retenue (5) dans la position de retenue contre l'orifice d'alimentation (23) et relâche l'élément de retenue (5) à une pression hydraulique définie s'exerçant sur celui-ci en direction du flux, qui est définissable par la force de maintien du verrouillage magnétique en vue de la libération de l'orifice d'alimentation (23),
**caractérisé**
**en ce que**, à l'intérieur de l'alimentation(3), une pièce de ratissage (40) déplaçable par le flux d'eaux usées dans un écart défini en amont de l'élément de retenue (5) est disposée de manière pivotable vers le haut, de sorte que les solides retenus par la pièce de ratissage (40) puissent être évacués par rinçage.

2. Dispositif de retenue selon la revendication 1, **caractérisé en ce que** la pièce de ratissage (40) est fixée de manière articulée dans l'alimentation (3) et dans la zone frontale de celle-ci.

3. Dispositif de retenue selon la revendication 1, **caractérisé en ce que** la pièce de ratissage (40) comprend un élément flotteur (42).
